Europäisches Patentamt

European Patent Office

Office européen des brevets

(11) Publication number: **0 325 410**
**A1**

(12) **EUROPEAN PATENT APPLICATION**

(21) Application number: **89300409.3**

(22) Date of filing: **17.01.89**

(51) Int. Cl.⁴: **G 03 B 19/07**
G 03 B 9/22, G 03 B 9/14

(30) Priority: **19.01.88 GB 8801091**

(43) Date of publication of application:
**26.07.89 Bulletin 89/30**

(84) Designated Contracting States:
**CH DE ES FR GB IT LI**

(71) Applicant: **PHOTO-ME INTERNATIONAL PLC**
**Station Avenue**
**Walton-on-Thames Surrey KT12 1SB (GB)**

(72) Inventor: **Caroselli, Giovanni Aristide**
**33 Spinney Hill Addleston**
**Weybridge Surrey (GB)**

(74) Representative: **White, Martin David et al**
**MARKS & CLERK 57/60 Lincoln's Inn Fields**
**London WC2A 3LS (GB)**

(54) **An identity-portrait camera.**

(57) An identity-portrait camera (10, 70), for use in an automatic photographic booth, has four/three lenses (14a-d, 72a-c) in a row to take four/three simultaneous photographs in a single exposure. Four/three irises (26a-d) for the lenses (14a-d, 72a-c) are provided by mutually overlapping portions (34a, b) of four/three pairs of apertures (36a, b) in longitudinally movable members (28a, b) which extend between triplex and duplex lens elements (24a, b). Tooth rack portions (30a, b) of these members (28a, b) engage opposite sides of a pinion (32) for simultaneous adjustment of all four/three irises by rotating the pinion (32) to produce mutually opposite movement of the members (28a, b).

A common shutter member (42) is pivoted to two crank discs (44a, b) so that it moves in an arcuate path while remaining in a given orientation, when opened and closed by means of a solenoid (52).

In one embodiment, see Figs. 3 and 4, all but a predetermined one of the lenses can be selectively blanked off, to give the facility of taking one or more single photographs, by means of a slidable blanking member (74), the position of which is controlled by a solenoid (78) through a linkage (80).

FIG.1.

## Description

### An identity-portrait camera

This invention relates to an identity-portrait camera.

It is an object of the invention to provide an identity-portrait camera for taking a plurality of simultaneous identity-portrait photographs.

The invention provides an identity-portrait camera as claimed in each of claims 1 to 11.

The invention will be described by way of example with reference to the accompanying drawings, wherein:-

Fig. 1 is a front elevation, partly broken away, of part of a four-lens identity-portrait camera embodying the invention;

Fig. 2 is a sectioned side elevation of part of the identity-portrait camera of Fig. 1;

Fig. 3 is a front elevation of part of a three-lens identity-portrait camera embodying the invention, set to take one or more single identity-portrait photographs; and

Fig. 4 corresponds to Fig. 3, but with the camera set to take a set of three simultaneous identity-portrait photographs.

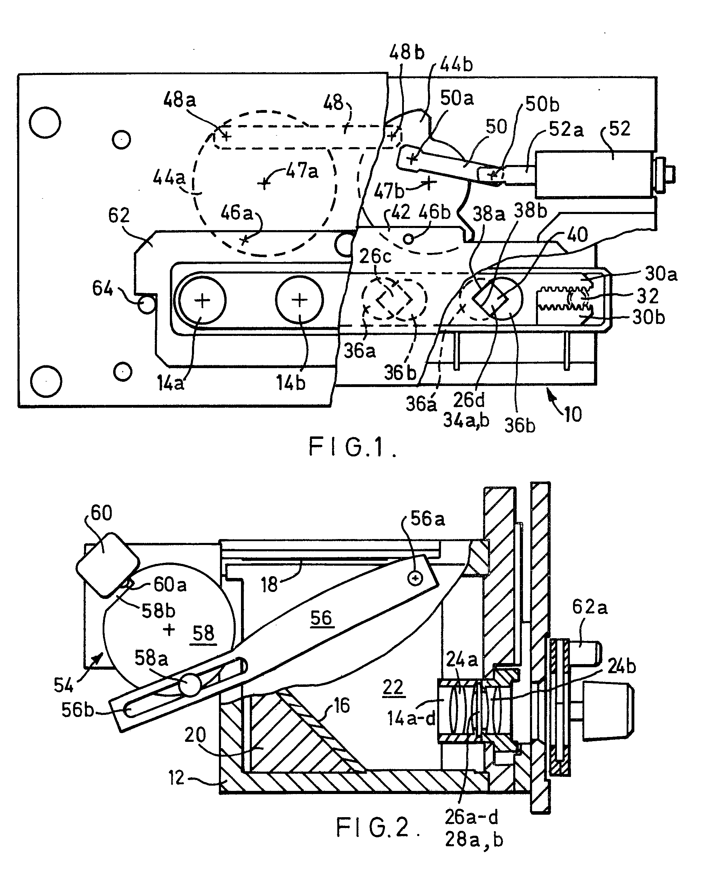

Referring to Figs. 1 and 2 of the drawings, there is illustrated part of an identity-portrait camera 10 for taking a plurality of simultaneous identity-portrait photographs. The camera 10 comprises a housing 12 in which there are mounted four lenses 14a, b, c, and d, mounted in a horizontal row extending laterally of the front of the camera 10, so as to focus four images of the subject (not shown) via a mirror 16 onto reversal-type photographic paper 18. The lenses 14 face the front of the camera 10, with their axes horizontal and perpendicular to the front of the camera 10.

The mirror 16 is mounted on a support 20 in the housing 12 so as to reflect the images from the four lenses 14a-d through a right angle onto the reversal-type photographic paper 18, which is guided (by conventional means, not shown) so as to extend horizontally across the top of a chamber 22 defined by the housing 12. The mirror 16 inverts the four images in well-known manner for the reversal-type photographic paper 18, which is to be subsequently processed (by means not shown) in well-known manner to produce the four identity-portrait photographs in a row along the paper.

Each lens 14, as shown in Fig. 2, comprises a triplex lens element 24a towards the rear of the camera and a duplex lens element 24b towards the front of the camera 10. Between the lens elements 24a, 24b of each lens 14a, b, c, d is a respective iris 26a, b, c, d.

The four irises 26a, b, c, d are formed by pairs of apertures in two face-to-face elongate members 28a, 28b, which extend along the row of lenses 14a to 14d, between the triplex lens element 24a and duplex lens element 24b of each lens 14. More particularly, there are four apertures 36a in member 28a and four apertures 36b in member 28b, hence, four pairs of apertures 36a, 36b. Each aperture 36a partially overlaps a corresponding aperture 36b to a variable extent, in that the elongate members 28a, 28b are longitudinally slidable along the row of lenses 14a to 14d.

More particularly, the two longitudinally movable members 28a and 28b each have a toothed rack 30a, 30b respectively engaging a common toothed pinion 32 on opposite sides from each other, so that rotation of the pinion 32 moves the two members 28a, 28b in opposite directions along the row of lenses 14a to 14d.

The size of each iris 26a to 26d is equal to the sizes of the overlapping portions 34a, 34b of each pair of apertures 36a, 36b and is the same for all four irises 26a-26d in all positions of members 28a, 28b.

As shown in Fig. 1, the overlapping portions 34a, b of each pair of apertures 36a, b each have an upper diagonal side 38a meeting a lower diagonal side 38b at a right angle, with the result that the mutually overlapping portions 34a, b define a square iris aperture 40, the size of which depends directly upon the degree of overlap of the apertures 36a, 36b in members 28a, 28b. Rotation of the toothed pinion 32 in one direction decreases the size of each iris aperture 40, whilst rotation of the pinion 32 in the opposite direction increases the size of each iris aperture 40.

For any given position of the pinion 32, and hence any given positional relationship of the member 28a, 28b, all four iris apertures 40 are the same size.

A common shutter member 42 forms a shutter for each lens 14a to 14d. The shutter member 42 is pivoted to two crank discs 44a, 44b at 46a and 46b respectively. The crank discs 44a, 44b themselves are pivotally mounted to the housing 12 at 47a, 47b respectively on parallel axes, and are interconnected by an arm 48 which is pivoted to the discs 44a, 44b at 48a, 48b, so that the shutter member 42 moves arcuately while remaining in the given orientation shown in Fig. 1. A connecting member 50 interconnects crank disc 44b and a solenoid 52, the connecting member 50 being connected at 50a to the disc 44b and at 50b to the armature 52a of solenoid 52. Hence, energisation for a timed period of the solenoid 52 opens the shutter for all four lenses 14a to 14d simultaneously for the same corresponding timed period, by rotating the crank discs 44a, 44b clockwise as seen in Fig. 1, de-energisation of the solenoid 52 allowing a return spring (not shown) in solenoid 52 to close the shutter again by pivoting the crank discs 44a, 44b counter clockwise again.

The camera 10 is adapted specifically for use in the well-known type of coin-operated, unattended photographic booth in which the subject wanting identity-portrait photographs sits in the booth and, when ready, inserts the required coinage to cause automatic operation of the camera in conjunction with automatic flash lamp means for illuminating the subject. Whereas known photographic booths of this type require the subject to remain for a sequence of photographs taken one after another, with a separate flash for each photograph, the camera 10 of Figs. 1 and 2 is designed to take all four photographs simultaneously, with a single flash (from flash lamp means not shown). The solenoid 52 operates the shutter member 42 so as to expose all four photographs simultaneously.

It is well-known in automatic photograph booths that the chemicals for processing the reversal-type paper age with use and require periodical replacement. The facility in the camera 10 for simultaneously adjusting all four iris apertures 40, by rotating the pinion 32, enables a mechanic quickly to adjust the camera to allow for ageing of the chemicals or other factors such as different speeds of reversal-type photographic paper and/or flash brightness.

The camera 10 is provided with a generally conventional guillotine mechanism 54 for cutting off an exposed portion of the photographic paper 18. The guillotine mechanism 54 comprises a guillotine blade 56, a motor-driven disc 58 and a microswitch 60. The blade 56 is pivoted at 56a to the housing 12 and is provided with a slot 56b in which there slides a connecting pin 58a which is secured to the periphery of the motor-driven disc 58. The microswitch 60 has a detent 60a engagable in a peripheral notch 58b of the disc 58. When microswitch 60 is energised, following exposure of the photographic paper 18, and following subsequent forward-feed of the photographic paper 18 to present a new, unexposed portion thereof in the chamber 22, the detent 60a disengages from the notch 58b and the disc 58 rotates to operate the guillotine blade 56, severing the photographic paper 18.

Finally, the front of the camera 10 is provided with a filter-holder 62 which rests on two support pins 64 (only one being shown) attached to housing 12. The filter holder 62 can be provided with any required colour filter (not shown) to provide required colour-balance. The filter holder 62 has a handle 62a for purposes of removal and replacement.

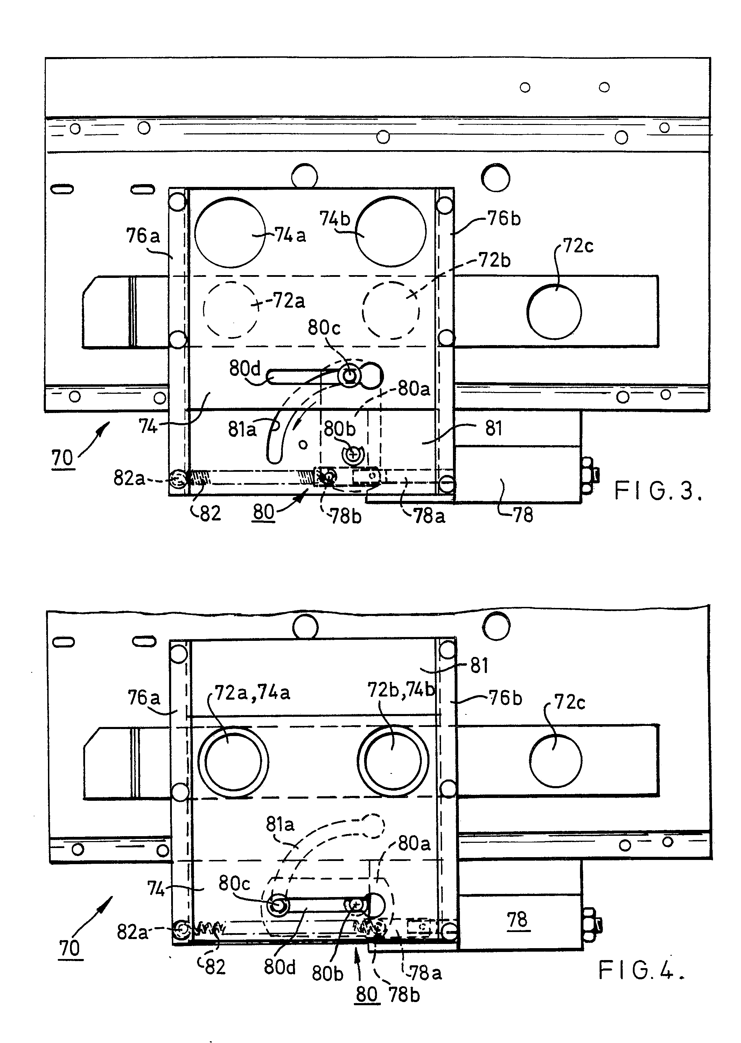

Referring to Figs. 3 and 4, a modified camera 70 has only three lenses 72a, b and c, each of which is similar to each of the four lenses 14a-d of camera 10 of Figs. 1 and 2. The modified camera 70 has the same kind of irises (not shown) and common shutter (not shown) as camera 10, except for differences due to the smaller number of lenses. Camera 70 also has similar film feed and guillotine mechanisms, not shown, and a similar internal mirror, not shown, to those of camera 10 of Figs. 1 and 2.

However, the camera 70 of Figs. 3 and 4 can be selectively set to take either one or more single identity-portrait photographs (as in Fig. 3) or a set of three simultaneous identity-portrait photographs (as in Fig. 4).

For this purpose, the camera 70 is provided with a blanking member 74 for selectively either blanking off two of the lenses 72a, b to leave just the third lens 72c unblanked, as in Fig. 3, or leaving all three lenses 72a, b and c unblanked, as in Fig. 4. The blanking member 74 is slidably guided in slides 76a, b and is connected to an operating solenoid 78 by a linkage 80. The linkage 80 comprises a crank 80a which is pivoted at 80b to the rear of a fixed support plate 81 and has a pin 80c projecting through an arcuate slot 81a in support plate 81 and engaged in a horizontal slot 80d in the blanking member 74. An armature 78a of solenoid 78 is connected at a pivot 78b to the crank 80a, whilst a return spring 82, which is a tension spring, is connected between a fixed point 82a and the pivot 78b on the crank 80a.

The blanking member 74 is only able to blank off the two lenses 72a, b because the third lens 72c is to one side of the blanking member 74 and its slides 76a, b. The blanking member 74 has two holes 74a, b corresponding to the two lenses 72a, b.

When solenoid 78 is de-energised, return spring 82 holds/returns the crank 80 in/to the position of Fig. 3, in which pin 80c is in its uppermost position along its arcuate path 80e and blanking member 74 is raised, so that holes 74a, b are out of registry with lenses 72a, b, which are hence blanked off. In this mode, operation of the common shutter (not shown in Figs. 3, 4) exposes lens 72c but not lenses 72a, b, so that one or more single photographs may be taken. The film feed mechanism (not shown) feeds the film (not shown) before and after each exposure.

When solenoid 78 is energised, it rotates the crank 80 to the position of Fig. 4, due to the armature 78a pulling pivot 78b. Pin 80c moves along arcuate slot 81a, sliding in horizontal slot 80d, and hence operates as a cam, sliding the blanking member 74 down to the position of Fig. 4, in which holes 74a, b are in registry with lenses 72a, b. In this mode, operation of the common shutter (not shown) exposes all three lenses 72a, b, c, to take three simultaneous photographs. Hence in this mode the film feed mechanism is required to feed unexposed film into position above all three lenses 72a, b, c (compare with Fig. 2) before each exposure, so that more length of film must be fed between exposures than in the single photograph mode.

Camera 70 can be incorporated in photographic apparatus for use in prisons, to take one front-facing and two opposite side-facing identity-portrait photographs of inmates in the single-photograph mode of Fig. 3. Such apparatus would not require coin-operation mechanism, of course.

## Claims

1. An identity-portrait camera (10) for taking a plurality of simultaneous identity-portrait photographs, comprising a corresponding number of lenses (14, 72) mounted in a row so as to focus images of the subject onto respective areas in a row of an image-forming surface (18), each lens (14, 72) comprising a plurality of lens elements (24a,b) and a respective iris between two of said elements, and means (32) for simultaneous corresponding adjustment of all the irises (26), characterised in that each iris (26) is formed by respective iris-defining portions (36a,b) of two longitudinally movable members (28a,b) each having a toothed rack (30a,b) engaging a common toothed pinion (32) on the opposite side from the other, so that rotation of the pinion (32) moves the two members (28a,b) in opposite directions so as to adjust all the irises (26).

2. An identity-portrait camera (10) for taking a plurality of simultaneous identity-portrait photographs, comprising a corresponding number of lenses (14, 72) mounted in a row so as to focus images of the subject onto respective areas in a row of an image-forming surface (18), and a common shutter member (42) forming a shutter for each lens (14, 72) and arranged to move in one direction to open the shutter and then the opposite direction to close the shutter, characterised in that the shutter member (42) is pivoted to each of two cranks (44a,b) which are pivotable on parallel axes so that the shutter member (42) moves arcuately while remaining in a given orientation.

3. A camera as claimed in claim 2 wherein a shutter-operating solenoid (52) is linked to one of the cranks (44b).

4. An identity-portrait camera for taking selectively, either a plurality of simultaneous identity-portrait photographs, or one or more single photographs, comprising a corresponding number of lenses (72) mounted in a row so as to focus images of the subject onto respective areas in a row of an image-forming surface (18), each lens (72) comprising a plurality of lens elements (24a,b) and a respective iris (26) between two of said elements (24a,b), means (32) for simultaneous corresponding adjustment of all the irises (26), and lens-blanking means (74) for selectively blanking off all but a predetermined one (72c) of the lenses (72) for taking the one or more single photographs.

5. A camera as claimed in claim 4, wherein each iris (26) is formed by respective iris-defining portions (36a,b) of two longitudinally movable members (28a,b) each having a toothed rack (30a,b) engaging a common toothed pinion (32) on the opposite side from the other, so that rotation of the pinion (32) moves the two members 28a,b) in opposite directions so as to adjust all the irises (26).

6. An identity-portrait camera for taking a plurality of simultaneous identity-portrait photographs, comprising a corresponding number of lenses (72) mounted in a row so as to focus images of the subject onto respective areas in a row of an image-forming surface, a common shutter member (42) forming a shutter for each lens (42) and arranged to move in one direction to open the shutter and then the opposite direction to close the shutter, and lens-blanking means (74) for selectively blanking off all but a predetermined one (72c) of the lenses (72) for taking the one or more single photographs.

7. A camera as claimed in claim 6, wherein the shutter member (42) is pivoted to each of two cranks (44a,b) which are pivotable on parallel axes so that the shutter member (42) moves arcuately while remaining in a given orientation.

8. A camera as claimed in claim 7 wherein a shutter-operating solenoid (52) is linked to one of the cranks (44b).

9. A camera as claimed in any one of claims 4 to 8, wherein the lens-blanking means (74) comprises a blanking member (74) slidably mounted in guiding means (76a,b) and a solenoid (78) connected through a linkage (80) to the blanking member (74).

10. A camera as claimed in claim 9 wherein the linkage (80) comprises a crank (30a) to which the solenoid (78) is connected and camming means (80c,d) linking the crank (80a) to the blanking member (74).

11. A camera as claimed in claim 10 wherein the camming means (80c,d) comprises a rotatable lever (80a) and a pin (80c) on the lever (80a) engaged in a slot (80d) in the blanking member (74).

FIG.1.

FIG.2.

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A- 566 611 (FLECCHIA) <br> * Page 1, lines 1-6; page 2, lines 25-43; page 3, lines 65-73; figures 1-3 * | 1,2,4,6 | G 03 B 19/07 <br> G 03 B 9/22 <br> G 03 B 9/14 |
| A | | 5 | |
| Y | US-A-4 112 450 (KONDO) <br> * Figures 9A-9D,12A-12C; column 1, lines 38-62; column 2, lines 24-43 * | 1 | |
| A | | 3,5,8 | |
| Y | FR-A-1 007 031 (WÖHLER) <br> * Page 1, left-hand column, paragraph 3 - right-hand column, paragraph 3; figures 1-3 * | 2 | |
| A | | 7 | |
| Y | DE-C- 285 556 (KUEHN) <br> * Page 1, lines 3-5,24-30,41-46; figures 1-3 * | 4,6 | |
| A | | 1,2 | TECHNICAL FIELDS SEARCHED (Int. Cl.4) |
| A | DE-C- 538 515 (BARENYI) <br> * Page 1, lines 1-36; figures 1-4 * | 2,7 | G 03 B |
| A | RESEARCH DISCLOSURE, no. 148, august 1976, page 11-12, London, GB; W.T. HOCHREITER: "Camera exposure control apparatus" <br> * Page 11, column 1; figures 1-3 * | 1-3,8 | |
| A | US-A-2 922 349 (ROCHWITE) <br> * Claims 1-3; figures 2,4,6,7 * | 1,2,4-7 | |

The present search report has been drawn up for all claims

| Place of search | Date of completion of the search | Examiner |
|---|---|---|
| THE HAGUE | 21-04-1989 | MANNTZ W W |

EPO FORM 1503 03.82 (P0401)